# EUROPÄISCHE PATENTSCHRIFT

(11) **EP 3 682 043 B1**
(45) Veröffentlichungstag und Bekanntmachung des Hinweises auf die Patenterteilung: **04.09.2024**
(21) Anmeldenummer: 18785516.8
(22) Anmeldetag: 21.09.2018
(51) Int. Cl.: C25B 1/04, C25B 9/19, C25B 9/70, C25B 15/08

(54) **ELEKTROLYSEEINHEIT UND ELEKTROLYSEUR**
ELECTROLYTIC UNIT AND ELECTROLYZER
UNITÉ D'ÉLECTROLYSE ET ÉLECTROLYSEUR

(30) Priorität: 24.11.2017 EP 17203524
(43) Veröffentlichungstag der Anmeldung: 22.07.2020
(73) Patentinhaber: Siemens Energy Global GmbH & Co. KG, 81739 München (DE)
(72) Erfinder: HAHN, Alexander, 91341 Röttenbach (DE); HERTSCH, Hagen, 91056 Erlangen (DE); RÜCKERT, Stephan, 91058 Erlangen (DE); PURUCKER, Thomas, 91093 Hessdorf (DE); SPIES, Alexander, 95478 Kemnath (DE); STRAUB, Jochen, 91054 Erlangen (DE); WAGNER, Richard, 91090 Effeltrich (DE)
(86) Internationale Anmeldenummer: PCT/EP2018/075554
(87) Internationale Veröffentlichungsnummer: WO 2019/101392

(56) Entgegenhaltungen:
- CH-A- 108 697
- CN-A- 101 654 787
- DE-A1- 102011 053 142
- DE-A1- 3 837 354
- JP-A- 2003 342 771
- KR-B1- 101 769 751
- US-A- 4 323 442

## Beschreibung

Die Erfindung betrifft eine Elektrolyseeinheit mit wenigstens einer Elektrolysezelle und ein Verfahren zum Betreiben der Elektrolysezelle.

Ein Elektrolyseur ist eine Vorrichtung, die mit Hilfe von elektrischem Strom eine Stoffumwandlung herbeiführt (Elektrolyse). Entsprechend der Vielfalt an unterschiedlichen Elektrolysen gibt es auch eine Vielzahl von Elektrolyseuren, wie beispielsweise einen Elektrolyseur für eine Wasserstoffelektrolyse.

Aktuelle Überlegungen gehen dahin, mit überschüssiger Energie aus erneuerbaren Energiequellen in Zeiten mit viel Sonne und viel Wind, also mit überdurchschnittlicher Solarstrom- oder Windkrafterzeugung, Wertstoffe zu erzeugen. Ein Wertstoff kann insbesondere Wasserstoff sein, welcher mit Wasserelektrolyseuren erzeugt wird. Mittels des Wasserstoffs kann beispielsweise sogenanntes EE-Gas hergestellt werden.

Dabei erzeugt ein (Wasserstoffelektrolyse-) Elektrolyseur mit Hilfe der elektrischen Energie, insbesondere aus Windenergie oder Sonnenenergie, zunächst Wasserstoff. Danach wird der Wasserstoff in einem Sabatierprozess zusammen mit Kohlendioxid zur Herstellung von Methan verwendet. Das Methan kann dann beispielsweise in ein bereits vorhandenes Erdgasnetz eingespeist werden und ermöglicht so eine Speicherung und einen Transport von Energie zum Verbraucher und kann so ein elektrisches Netz entlasten. Alternativ dazu kann der vom Elektrolyseur erzeugte Wasserstoff auch unmittelbar weiterverwendet werden, beispielsweise für eine Brennstoffzelle.

Aus DE 10 2011 053 142 A1, CH 108 697 A und CN 101 654 787 A sind alkalische Elektrolyseanlagen bekannt, bei denen Gasabscheidevorrichtungen vorgesehen sind, die oberhalb der Elektrolysezelle angeordnet sind. In der DE 38 37 354 A1 ist ein Verfahren zur Sicherung einer Druckwasserelektrolyseanlage mit einem Elektrolysezellenblock und demgegenüber in Schwerkraftrichtung höher angeordneten Sauerstoff- und Wasserstoffseparatoren angegeben. Es soll eine Lösung geschaffen werden, mit welcher der Sicherungsaufwand bei der Druckwasserelektrolyse verändert wird, sowie dank einfacher Mittel die notwendige Sicherheit erreichbar ist und der Betrieb von drucklosen Elektrolysezellen möglich gemacht wird. Auch aus der US 4 323 442 A, JP 2003 342771 A sowie der KR 101 769 751 B1 sind entsprechende Elektrolyseanlagen bekannt.

Bei einem Elektrolyseur für die Wasserstoffelektrolyse wird Wasser in Wasserstoff und Sauerstoff zerlegt. Bei einem PEM-Elektrolyseur wird typischerweise anodenseitig destilliertes Wasser als Edukt zugeführt und an einer protonendurchlässigen Membran (engl.: "Proton-Exchange-Membrane"; PEM) zu Wasserstoff und Sauerstoff gespalten. Das Wasser wird dabei an der Anode zu Sauerstoff oxidiert. Die Protonen passieren die protonendurchlässige Membran. Kathodenseitig wird Wasserstoff produziert.

Das Wasser sollte dabei konstant in den Anodenraum und/oder Kathodenraum gefördert werden, um eine gleichmäßige Verteilung des Wassers in diesen Räumen zu gewährleisten und damit auch eine effektive elektrolytische Spaltung des Wassers. Das Fördern erfolgt typischerweise mit Pumpen. Nachteilig bedürfen Pumpen regelmäßiger Wartung. Weiterhin muss ein Regeln der Pumprate in Abhängigkeit des Drucks in der Elektrolysezelle erfolgen, um einen gleichmäßigen Edukt-Durchsatz zur erzielen. Dies erfordert nachteilig zusätzliche Regelungstechnik, was den Aufbau des Elektrolyseurs komplexer gestaltet. Zusätzlich verbrauchen die Pumpen elektrische Energie, was den Gesamtwirkungsgrad der Elektrolyse nachteilig verringert.

Aufgabe der vorliegenden Erfindung ist es daher, einen Wasserelektrolyseur und ein Verfahren zum Betreiben eines Wasserelektrolyseurs anzugeben, welches energieeffizient und wartungsarm ist.

Die Aufgabe wird mit einer Elektrolyseeinheit gemäß Anspruch 1 und einem Verfahren gemäß Anspruch 2 gelöst.

Die erfindungsgemäße Elektrolyseeinrichtung zur Elektrolyse von Wasser umfasst wenigstens eine Elektrolysezelle, wobei die Elektrolysezelle einen Anodenraum mit einer Anode und einen Kathodenraum mit einer Kathode umfasst. Der Anodenraum ist vom Kathodenraum mittels einer Protonenaustausch-Membran getrennt. Der Anodenraum ist geeignet, Wasser aufzunehmen und an der Anode zu einem ersten Produkt umfassend Sauerstoff zu oxidieren. Der Kathodenraum ist geeignet, Wasser aufzunehmen und an der Kathode zu einem zweiten Produkt umfassend Wasserstoff zu reduzieren. Die Elektrolyseeinrichtung umfasst weiterhin eine erste Gasabscheidevorrichtung zum Abscheiden von Sauerstoff, wobei die erste Gasabscheidevorrichtung zum Durchführen eines natürlichen Wasserumlaufs oberhalb der Elektrolysezelle angeordnet ist.

Bei dem erfindungsgemäßen Verfahren zum Betreiben einer Elektrolyseeinrichtung zur Elektrolyse von Wasser wird in einer Elektrolysezelle aus Wasser als Edukt ein Sauerstoff umfassendes erstes Produkt und ein Wasserstoff umfassendes zweites Produkt mittels einer sauren Elektrolyse hergestellt. Der Umlauf des Edukts, des ersten Produkts und/oder des zweiten Produkts erfolgt als Naturumlauf.

Als Naturumlauf wird ein Umlauf des Wassers in die Elektrolysezelle und durch die Elektrolysezelle und ein Umlauf des Wassers und der Produkte aus der Elektrolysezelle heraus zur Gasabscheidevorrichtung verstanden, der aufgrund der Dichteunterschiede der Komponenten auf "natürliche Weise", also ohne den Einsatz von Pumpen, erfolgt. Die in der Elektrolysezelle entstehenden Gasblasen führen zu einer geringeren Dichte des Wassers. Aufgrund des Dichteunterschieds strömen das Wasser und die Produkte ohne den Einsatz einer mechanischen Pumpe durch die Elektrolysezelle.

Vorteilhaft erfolgt somit sowohl die Wasserversorgung als auch das Wärmemanagement der Elektrolyseeinrichtung durch einen Naturumlauf sowohl auf der Sauerstoffseite als auch auf der Wasserstoffseite oder ausschließlich auf der Sauerstoffseite. Vorteilhaft wird somit der Einsatz einer mechanischen Umwälzeinrichtung zum Umwälzen des Wassers und der Produkte vermieden. Dies verringert vorteilhaft die Wartungsintervalle der Anlage und somit auch die Standzeit der Anlage. Vorteilhaft wird durch das physikalische Prinzip des Naturumlaufs beruhend auf den Dichteunterschieden die Wasserförderrate von selbst, also ohne den Eingriff von Reglern, reguliert, wodurch sich bei einer geeigneten Prozessgestaltung die Wasserförderrate an den Wärmeverlust der Anlage anpasst. In anderen Worten bedeutet das, dass bei einer erhöhten Wärmeproduktion die Wasserförderrate steigt. Weiterhin ist es so, dass je höher der Gasabscheider oberhalb der Elektrolysezelle angeordnet ist, eine höhere Förderrate erreicht wird, vorausgesetzt das Gas-Wasser-Gemisch umfasst eine konstante Gasmenge.

Die Elektrolyseeinrichtung umfasst eine erste Leitung, welche mit einem oberen Abschnitt des Anodenraums und der ersten Gasabscheidevorrichtung verbunden ist. Die Elektrolysevorrichtung umfasst weiterhin eine zweite Leitung, welche mit dem ersten Gasabscheider und einem unteren Abschnitt des Anodenraums verbunden ist.

Die erste Leitung dient als Steigrohr, die zweite Leitung dient als Fallrohr. Vorteilhaft steigt somit das Wasser mit den Produkten innerhalb der ersten Leitung in die Gasabscheidevorrichtung auf. In der Gasabscheidevorrichtung wird das Gas, also das Produkt, in diesem Fall Sauerstoff, von dem Wasser getrennt. Das Wasser, welches nun wiederum eine höhere Dichte im Vergleich zum Produkt-Wasser-Gemisch aufweist, wird über die zweite Leitung, also das Fallrohr, zurück in den Anodenraum der Elektrolysezelle geführt. Dort wird wiederum Sauerstoff produziert, welcher die Dichte herabsetzt, sodass das Wasser-Produkt-Gemisch wiederum im Steigrohr aufsteigt.

Die Elektrolyseeinrichtung umfasst eine zweite Gasabscheidevorrichtung zum Abscheiden von Wasserstoff, eine dritte Leitung, welche mit einem oberen Abschnitt des Kathodenraums und der zweiten Gasabscheidevorrichtung verbunden ist und eine vierte Leitung, welche mit der zweiten Gasabscheidevorrichtung und einem unteren Abschnitt des Kathodenraums verbunden ist, wobei die zweite Gasabscheidevorrichtung zum Durchführen eines natürlichen Wasserumlaufs oberhalb der Elektrolysezelle angeordnet ist.

Die dritte Leitung dient als Steigrohr, die vierte Leitung dient als Fallrohr, wobei diese Leitungen die zweite Gasabscheidevorrichtung mit der Kathodenseite der Elektrolysezelle verbinden. Vorteilhaft steigt das Wasser-Wasserstoff-Gemisch, welches eine geringere Dichte als das reine Wasser aufweist, in dem Steigrohr auf. Es gelangt so in die zweite Gasabscheidevorrichtung, wo der Wasserstoff vom Wasser abgetrennt wird. Das Wasser, welches nun wiederum eine höhere Dichte als das Produkt-Wasser-Gemisch aufweist, wird über das Fallrohr, also die vierte Leitung, zurück in den Kathodenraum geführt.

In einer weiteren vorteilhaften Ausgestaltung und Weiterbildung der Erfindung ist ein erster Durchmesser der ersten Leitung kleiner als ein zweiter Durchmesser der dritten Leitung.

Die Wasserspaltung findet vereinfacht nach Gleichung 1 statt:

*H₂O* (*l*) → *H₂*(*g*) + ¹/₂*O*₂(*g*) (1)

Aus Gleichung (1) wird deutlich, dass etwa das doppelte Volumen an Wasserstoff wie Sauerstoff entsteht. Bei gleichartig gestalteter Zell- und Rohrleitungsführung des Elektrolyseurs für die Wasserstoffseite und die Sauerstoffseite, weist die Wasserstoffseite somit eine höhere Wasserförderrate als die Sauerstoffseite auf. Ist die Elektrolyseeinheit derart gestaltet, dass die Förderrate durch das Steigrohr, also die erste und/oder dritte Leitung, limitiert ist, kann durch Anpassung des Steigrohrdurchmessers die Förderrate optimiert werden. Aufgrund des geringeren Gasvolumenstroms der Sauerstoffseite, ist es möglich, dass dort eine geringere Wasserförderrate vorliegt. Wird der Durchmesser des Steigrohrs der Sauerstoffseite, also die erste Leitung, kleiner als die dritte Leitung dimensioniert, so kann vorteilhaft eine höhere Wasserförderrate erzielt werden. Besonders vorteilhaft ist es, wenn die erste Leitung der Sauerstoffseite etwa die halbe Querschnittsfläche gegenüber der Querschnittsfläche der dritten Leitung der Wasserstoffseite aufweist.

In der zweiten Leitung ist ein erster Wärmetauscher und in der vierten Leitung ist ein zweiter Wärmetauscher angeordnet. Der erste und der zweite Wärmetauscher sind thermisch gekoppelt.

In einer nicht beanspruchten Ausgestaltung und Weiterbildung der Erfindung sind der erste und der zweite Wärmetauscher stofflich miteinander gekoppelt. In anderen Worten heißt das, dass es nur einen gemeinsamen Wärmetauscher gibt. Dieser kann insbesondere zwei Zulauföffnungen, eine für das sauerstoffseitige Wasser und eine für das wasserstoffseitige Wasser, und eine gemeinsame Ausgangsöffnung umfassen.

Innerhalb der Elektrolysezelle werden prozessbedingt beim Spaltungsprozess des Wassers neben Protonen auch Wasser von der Sauerstoffseite, also dem Anodenraum, auf die Wasserstoffseite, also dem Kathodenraum, transportiert. Werden das anodenseitige Wasser und das kathodenseitige Wasser voneinander getrennt, so kommt es dadurch nachteilig zu einer Pegelverschiebung in den Gasabscheidevorrichtungen. Das stoffliche Vermischen in dem Wärmetauscher verhindert so vorteilhaft eine Pegelverschiebung in den Gasabscheidevorrichtungen. Vorteilhaft wird somit vermieden, dass der Kathodenraum oder der Anodenraum vollständig entleert werden, so dass eine Gasvermischung des Wasserstoffs und des Sauerstoffs stattfinden. Eine geringfügige Erhöhung der Wasserstoffkonzentration auf der Sauerstoffseite steht dem sicheren Betrieb der Elektrolyseanlage nicht entgegen, da lediglich die gelösten Gase vermischt werden, aber keine Gasphase sich vermischt. Insbesondere deshalb ist es auch vorteilhaft, wenn diese Vermischung am tiefsten Punkt der Anlage erfolgt, um einen größtmöglichen Abstand der beiden Gasphasen umfassend Sauerstoff, bzw. Wasserstoff zu erreichen.

Gemäß der Erfindung sind die zweite Leitung und die vierte Leitung zum Wasserausgleich über eine Verbindungsleitung verbunden. Diese Verbindungsleitung, auch Bypassleitung genannt, ist derart angeordnet, dass das Wasser der Anodenseite und das Wasser der Kathodenseite kurz vor Eintritt in die Elektrolysezelle, insbesondere am tiefsten Punkt der Anlage, gemischt werden. Die natürlichen Wasserumläufe erfolgen aufgrund der Dichteunterschiede des Wassers und der Produkte auf natürliche Weise, ohne den Einsatz von Pumpen.

Innerhalb der Elektrolysezelle wird prozessbedingt beim Spaltungsprozess des Wassers neben Protonen auch eine gewisse Wassermenge von der Sauerstoffseite auf die Wasserstoffseite transportiert. Werden das anodenseitige Wasser und das kathodenseitige Wasser voneinander getrennt, so kommt es dadurch nachteilig zu einer Pegelverschiebung in den Gasabscheidevorrichtungen. Vorteilhaft wird diese Pegelverschiebung aufgrund des prozessbedingten Wassertransports von der Sauerstoffseite zur Wasserstoffseite in der Elektrolysezelle vermieden. Vorteilhaft wird so vermieden, dass eine Nachförderung von Wasser in eine der Gasabscheidevorrichtungen mittels Pumpen nötig wird. Durch das Zusammenmischen der beiden Wasserströme kurz vor Eintritt in die Elektrolysezelle erfolgt lediglich ein geringer Transport von gelöstem Wasserstoff auf die Sauerstoffseite der Elektrolysezelle, was einen sicheren Betrieb der Anlage nicht gefährdet.

In einer weiteren vorteilhaften Ausgestaltung umfasst die Elektrolyseeinrichtung wenigstens zwei Elektrolysezellen und wenigstens zwei erste Gasabscheidevorrichtungen, wobei die ersten Gasabscheidevorrichtungen über eine siphonartige fünfte Leitung geeignet zum Führen des Wassers verbunden sind.

In einer weiteren vorteilhaften Ausgestaltung und Weiterbildung der Erfindung umfasst die Elektrolyseeinrichtung wenigstens zwei Elektrolysezellen und wenigstens zwei zweite Gasabscheidevorrichtungen. Die zweiten Gasabscheidevorrichtungen sind über eine siphonartige sechste Leitung geeignet zum Führen des Wassers verbunden.

Vorteilhaft wird durch diese Verbindungsleitungen der Aufbau eines Elektrolysestacks, also einer Elektrolyseeinheit umfassend wenigstens zwei Elektrolysezellen, vereinfacht, da die Anzahl der Leitungen verringert wird.

In einer weiteren vorteilhaften Ausgestaltung und Weiterbildung der Erfindung umfasst die Elektrolyseeinrichtung eine verschließbare Öffnung des Kathodenraums, welche geeignet ist, eine siebte Leitung, in anderen Worten eine zweite Steigleitung, teilweise aufzunehmen welche den Kathodenraum mit der zweiten Gasabscheidevorrichtung verbindet. Diese siebte Leitung ist dem Kathodenraum gegenüberliegend der dritten Leitung angeordnet. Wird es nötig die Wasserstofffördermenge zu erhöhen, was die dritte Leitung als Steigrohr nicht mehr gewährleisten kann, so kann das Wasserstoff-Wasser-Gemisch zusätzlich über die siebte Leitung in die zweite Gasabscheidevorrichtung aufsteigen. Der effektive Querschnitt des Steigrohrs wird so durch das beidseitige Ausströmen des Wasserstoff-Wasser-Gemischs aus der Elektrolysezelle erreicht, was vorteilhaft die Limitierung der Wasserförderung verhindert. Es hat sich durch Experimente gezeigt, dass der Betriebspunkt der Elektrolyseanlage somit wieder zu einem optimalen Betriebspunkt hinsichtlich der Fördercharakteristik geführt werden kann.

In einer weiteren vorteilhaften Ausgestaltung und Weiterbildung der Erfindung umfasst die Elektrolyseeinrichtung eine Zuführvorrichtung für Frischwasser. Diese ist derart angeordnet, dass das Frischwasser in die fünfte und/oder sechste Leitung hinzugefügt werden kann. Besonders bevorzugt erfolgt die Einspeisung der Wassermenge, die bei der Reaktion verbraucht wurde, in die fünfte Leitung, also die Verbindungsleitung der ersten Gasabscheidevorrichtungen für Sauerstoff. Besonders vorteilhaft ersetzt das Wasser dann das in der Anodenseite verbrauchte Wasser. Vorteilhaft wird hierdurch eine zusätzliche Rohrleitung zu den einzelnen Gasabscheidevorrichtungen vermieden, was den Aufbau der Elektrolyseeinheit vereinfacht. Ein Verbinden der ersten und/oder zweiten Gasabscheidevorrichtungen gleicht sich die Füllhöhe der ersten und/oder zweiten Gasabscheidevorrichtungen über die Wasserrückführungsleitung aus. Durch die jeweilige Verbindung der Wasserstoff- und Sauerstoffgasabscheider über den Wasserkreis vor Eintritt in die Zellstapel gleichen sich diese wiederum untereinander aus.

Durch den nivellierenden Effekt auf jeder Gasseite bzw. durch den Ausgleich der Gasseiten über den Wärmetauscherkreis weisen die Elektrolysezellen, bzw. mehrere verbundene Elektrolysestacks, vorteilhaft untereinander einen ausgeglichenen Füllstand in den jeweiligen Gasabscheidevorrichtungen auf.

In einer weiteren vorteilhaften Ausgestaltung und Weiterbildung der Erfindung liegt der Betriebsdruck in der Elektrolyseeinrichtung in einem Bereich von 0,5 bar bis 2 bar, besonders bevorzugt bei einem bar, also atmosphärischem Druck. Bei diesem atmosphärischen Druck sind die Dichteunterschiede durch die Gasproduktion in der Elektrolysezelle so groß, dass ein Naturumlauf sicher stattfindet und somit die Elektrolyseeinheit ohne den Einsatz von Pumpen betrieben werden kann. In anderen Worten liegt der Betriebsdruck der Elektrolyseeinrichtung maximal 0,5 bar ober- oder unterhalb des Betriebsdrucks der ersten und/oder zweiten Gasabscheidevorrichtung.

In einer weiteren vorteilhaften Ausgestaltung und Weiterbildung der Erfindung erfolgt das Zuführen des Sauerstoff-Wasser-Gemischs aus der ersten Leitung in die erste Gasabscheidevorrichtung auf dem Niveau des Flüssig-Füllstands in der ersten Gasabscheidevorrichtung. In anderen Worten befindet sich die Zufuhröffnung in der ersten Gasabscheidevorrichtung auf Höhe der Phasengrenze zwischen Gas und Flüssigkeit in der ersten Gasabscheidevorrichtung. Vorteilhaft wird auch das Wasserstoff-Wasser-Gemisch aus der dritten Leitung in die zweite Gasabscheidevorrichtung auf Höhe einer zweiten Flüssigfüllhöhe, welche die Phasengrenze in der zweiten Gasabscheidevorrichtung bezeichnet, hinzugegeben. In anderen Worten bedeutet das auch, dass die Zufuhröffnung in der zweiten Gasabscheidevorrichtung auf Höhe der Phasengrenze zwischen Gas und Flüssigkeit vorliegt. Vorteilhaft ist die Förderrate höher, wenn der Abstand zwischen der Rücklaufleitung aus der ersten und/oder zweiten Gasabscheidevorrichtung minimal ausgelegt ist.

In einer weiteren vorteilhaften Ausgestaltung und Weiterbildung der Erfindung umfasst die fünfte und/oder sechste Leitung wenigstens ein Druckregelventil. Die Druckregelventile befinden sich am Ende der Rohrleitung, welche die Gasabscheidevorrichtungen je einer Gasseite miteinander verbinden. Sind beispielsweise die erste und zweite Gasabscheidevorrichtung mechanisch gleich aufgebaut, ist es entscheidend, dass es zu keiner Pegelverschiebung kommt. Das heißt, wenn eine Gasseite einen höheren Druck aufweist, so verschiebt sich das Wasser auf die korrespondierende andere Gasseite. Der Einsatz eines Druckregelventils verhindert dies vorteilhaft.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: eine Elektrolyseeinheit mit einer ersten und einer zweiten Gasabscheidevorrichtung;
- Figur 2: eine Elektrolysezelle mit Protonenaustauschmembran;
- Figur 3: eine Elektrolyseeinheit mit einer ersten und einer zweiten Gasabscheidevorrichtung und einem Wasserbypass;
- Figur 4: eine Elektrolyseeinheit umfassend zwei Elektrolysezellen und miteinander verbundene erste Gasabscheidevorrichtungen.

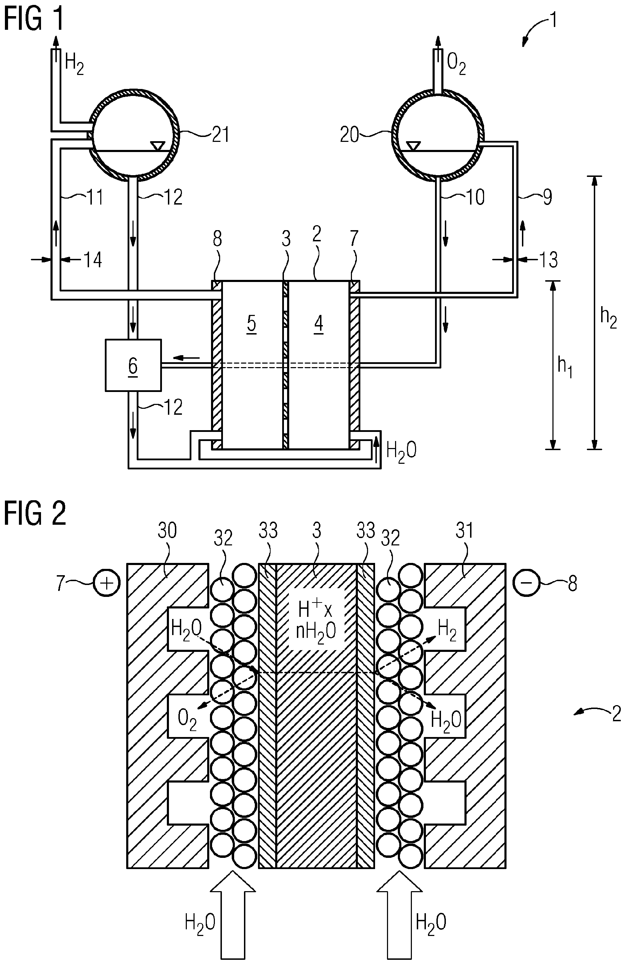

Figur 1 zeigt ein erstes Ausführungsbeispiel einer Elektrolyseeinheit 1 mit einer Elektrolysezelle 2. Die Elektrolysezelle 2 umfasst eine Protonenaustauschmembran 3, welche den Anodenraum 4 vom Kathodenraum 5 trennt. Der Anodenraum 4 umfasst eine Anode 7. Der Kathodenraum 5 umfasst eine Kathode 8. Im Anodenraum 4 wird an der Anode Wasser H₂O zu Sauerstoff O₂ oxidiert. Das während der Elektrolyse im Anodenraum 4 entstehende Sauerstoff-Wasser-Gemisch hat eine geringere Dichte als reines Wasser. Dadurch steigt es in der ersten Leitung 9, auch Steigrohr genannt, in eine erste Gasabscheidevorrichtung 20 auf. Die erste Gasabscheidevorrichtung 20 befindet sich oberhalb des Anodenraums 4. In der ersten Gasabscheidevorrichtung 20 trennt sich der Sauerstoff vom Wasser. Der Sauerstoff O₂ kann aus der Elektrolyseeinheit 1 herausgeführt werden. Das Wasser wird über eine zweite Leitung 10 in einen Wärmetauscher 6 geführt. Im Kathodenraum wird während der Elektrolyse an der Kathode 8 Wasser zu Wasserstoff H₂ reduziert. Das Wasserstoff-Wasser-Gemisch steigt aufgrund der niedrigeren Dichte im Vergleich zu Wasser über eine dritte Leitung 11 in eine zweite Gasabscheidevorrichtung 21 auf. In der zweiten Gasabscheidevorrichtung 21 trennt sich der Wasserstoff vom Wasser. Der Wasserstoff verlässt die Elektrolyseeinheit 1. Das Wasser kann über eine vierte Leitung 12 in den Wärmetauscher geführt werden. Das Wasser wird anschließend von dem Wärmetauscher 6 aus zurück in den Anodenraum 4 und den Kathodenraum 5 geführt. Der Wärmetauscher wird mit einem Kühlmittel, insbesondere Wasser, betrieben. Zwischen diesem Kühlmittel und dem Wasser aus der Elektrolyse findet kein Stoffaustausch statt. Der Kühlmittelzustrom und -abstrom aus dem Wärmetauscher 6 ist der übersichtshalber nicht den Figuren 1, 3, und 4 gezeigt.

Vorteilhaft ist die Elektrolyseeinheit 1 dynamisch betreibbar, das heißt je nach Lasteintrag kann die Elektrolyseeinheit 1 mit einer Energiedichte von mehr als 0 A/cm² bis zu 4 A/cm², besonders bevorzugt von mehr als 1 A/cm² bis 3 A/cm², betrieben werden.

Die erste und die zweite Gasabscheidevorrichtung 20, 21 liegen auf einer Höhe h₂. Die maximale Höhe der Elektrolysezelle beträgt h₁. Die Höhe h₂ liegt oberhalb der Höhe von h₁. Dadurch kann allein aufgrund der im Elektrolyseur entstehenden Dichteunterschiede eine natürliche Umwälzung der Edukte und Produkte im Elektrolyseur gewährleistet werden. Beide Höhen müssen aber oberhalb der Höhe h₁ der Elektrolysezelle liegen. Zusätzliche Pumpen oder andere Fördermittel sind vorteilhaft nicht nötig. Alternativ zu der hier gezeigten Ausführung, ist es auch möglich den Naturumlauf ausschließlich auf der Sauerstoffseite, also im Anodenraum 4 durchzuführen. Durch das auf der physikalischen Größe der Dichte basierende Prinzip des Naturumlaufs, reguliert sich die Wasserförderrate selbst. Das heißt, bei einer geeigneten Prozessgestaltung wird bei einer erhöhten Gasproduktionsrate die Wasserförderrate gesteigert, wodurch wiederum die Wärme vorteilhaft abgeführt wird.

Besonders vorteilhaft ist der Betrieb des Naturumlaufs bei einem atmosphärischen Druck, da hier die Gasblasengröße des Wasserstoffs und/oder Sauerstoffs und damit die resultierende Transportfähigkeit hinsichtlich der Gase und des Wassers ausreichend groß ist, sodass auf Pumpen vollständig verzichtet werden kann.

Die Wasserkreisläufe der Wasserstoff- und Sauerstoffseite, also des Wassers im Anodenraum 4 und im Kathodenraum 5 sind über den Wärmetauscher 6 miteinander verbunden.

Aufgrund der Reaktionsgleichung der Wasserspaltung wird deutlich, dass etwa das doppelte Volumen an Wasserstoffgas wie Sauerstoffgas bei der Zerlegung des Wassers entsteht. Somit würde bei einem gleich gestalteten Rohrdurchmesser der Wasserstoffseite und der Sauerstoffseite, die Wasserstoffseite eine höhere Wasserförderrate als die Sauerstoffseite aufweisen, solange die Förderrate nicht durch den Rohrdurchmesser limitiert wird. Wird die Förderrate des Wassers durch das Steigrohr limitiert, so kann durch Anpassung des Steigrohrdurchmessers die Förderrate optimiert werden. Um somit den Wasserdurchfluss auf beiden Seiten zu optimieren, wird der erste Durchmesser 13 der ersten Leitung 9 kleiner als der zweite Durchmesser 14 der dritten Leitung 11 dimensioniert. Besonders vorteilhaft weist die erste Leitung 9 eine Querschnittsfläche von ungefähr der Hälfte der Querschnittsfläche der dritten Leitung 11 auf. Vorteilhaft kann im Vergleich zu einer konventionellen gleichartigen Rohrdurchmesserverteilung eine höhere Wasserförderrate, insbesondere auf der Anodenseite, erzielt werden.

Figur 2 zeigt eine Elektrolysezelle mit einer Protonenaustauschmembran. Die Elektrolysezelle umfasst eine Anode 7 und eine Kathode 8. An die beiden Elektroden 7, 8 Grenzen jeweils Bipolarplatten 30, 31. Die Bipolarplatten grenzen jeweils an eine poröse Trägerstruktur 32. Durch diese Trägerstruktur 32 fließt das Edukt Wasser durch die Elektrolysezelle 2. Die poröse Trägerstruktur 32 grenzt wiederum an eine elektrokatalytische Schicht 33. Eine elektrokatalytische Schicht 33 ist im Anodenraum 4 angeordnet, eine elektrokatalytische Schicht 33 ist im Kathodenraum 5 angeordnet. Die elektrokatalytische Schicht 33 der Anodenseite umfasst typischerweise Iridium, die elektrokatalytische Schicht 33 der Kathodenseite umfasst typischerweise Platin. Zwischen diesen beiden katalytischen Schichten 33 befindet sich die Protonenaustauschmembran PEM.

Diese umfasst insbesondere ein sulfoniertes Fluorpolymer, besonders bevorzugt umfassend Perfluorosulfonsäure. Ein Vorteil der PEM-Elektrolysezelle liegt darin, dass als Edukt reines Wasser verwendet werden kann. Es ist vorteilhaft keine Lauge oder andere flüssige Komponenten als Trägerkomponente für das Wasser zu verwenden.

In einem weiteren, nicht in den Figuren dargestellten, Ausführungsbeispiel einer Elektrolyseeinheit 1 mit einer Elektrolysezelle 2 wird eine alternative Anordnung der Steigrohre 11 aus dem Kathodenraum 5 eingesetzt. Alle Komponenten sind in gleicher Weise angeordnet wie im ersten Ausführungsbeispiel in Figur 1. Lediglich ein zusätzliches Steigrohr verbindet den Kathodenraum 5 mit der zweiten Gasabscheidevorrichtung 21. Ist die Förderrate aufgrund der vorliegenden Betriebsbedingungen trotz der unterschiedlichen Querschnittsfläche der Steigrohre 10 und 11 nicht ausreichend, so kann auf der Wasserstoffseite eine zusätzliche zweite Steigleitung 15 vorhanden sein. Diese zweite Steigleitung, in anderen Worten siebte Leitung, garantiert vorteilhaft eine ausreichend hohe Förderrate des Wassers und des Wasserstoffs in die zweite Gasabscheidevorrichtung 21. Es ist ebenso denkbar, dass das erste Ausführungsbeispiel und das zweite Ausführungsbeispiel kombiniert werden können. Das bedeutet in anderen Worten, dass eine zweite Steigleitung vorhanden ist, welche aber über den Einsatz von Ventilen nur dann geöffnet wird, wenn es aufgrund der Förderrate auf der Wasserstoffseite notwendig ist.

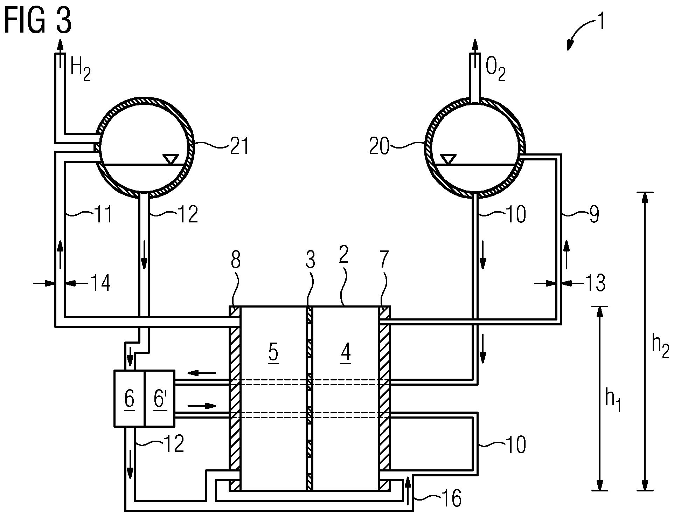

Figur 3 zeigt ein drittes Ausführungsbeispiel einer Elektrolyseeinheit 1 mit einer Elektrolysezelle 2 mit einer ersten Gasabscheidevorrichtung 20 und einer zweiten Gasabscheidevorrichtung 21. Die Gasabscheidevorrichtungen 20, 21 sind jeweils über Steigrohre 9, 11 mit dem Anodenraum 4 bzw. Kathodenraum 5 verbunden. Die Gasabscheidevorrichtungen 20, 21 sind jeweils über eine zweite Leitung 10 und eine vierte Leitung 12 mit dem Wärmetauscher 6 verbunden. Die zweite Leitung 10 verbindet wiederum den Wärmetauscher 6 mit dem Anodenraum 4. Die vierte Leitung 12 verbindet den Wärmetauscher 6. In anderen Worten ist in der zweiten Leitung 10 der Wärmetauscher 6 angeordnet und in der vierten Leitung 12 ist ebenfalls der Wärmetauscher 6' angeordnet. Im Wärmetauscher 6 und 6' findet hier kein Stoffaustausch statt, sodass das zurückgeführte Wasser der Anodenseite von dem zurückgeführten Wasser der Kathodenseite getrennt ist. Nachteilig würde das komplette das Trennen der Wasserkreisläufe in dieser Art zu einer Pegelverschiebung in den Gasabscheidern führen, da bei der Spaltungsreaktion des Wassers neben Protonen auch Wasser von der Sauerstoffseite auf die Wasserstoffseite transportiert wird. Durch die in diesem dritten Ausführungsbeispiel dargestellte Rohrleitungsführung, welche eine Bypassleitung 16 zwischen der zweiten Leitung 10, also dem Anodenraum 4, und der vierten Leitung 12, also dem Kathodenraum 5, vorsieht, werden die Wasserkreisläufe miteinander verbunden. Vorteilhaft werden die rücklaufenden Wasserströme nicht im Wärmetauscher 6 miteinander vermischt, sondern erst unmittelbar vor dem Eintritt in die Elektrolysezelle 2. Durch die Verbindung der Kathodenraum mit der Anodenseite bildet sich ein kommunizierendes System aus, welches vorteilhaft ein Ausgleichen des Wasserstroms von der Wasserstoffseite zur Sauerstoffseite gewährleistet. Eine geringfügige Erhöhung der Wasserstoffkonzentration auf der Sauerstoffseite beeinträchtigt den sicheren Betrieb der Anlage nicht. Werden die Wasserströme bereits im Wärmetauscher 6 miteinander gemischt, so ist die Verweilzeit der gemischten Wasserströme deutlich höher. Dies führt dazu, dass es zu einem Anstieg der jeweiligen Fremdgaskonzentration in den Gasabscheider kommen kann. Wird lediglich ein gerichteter Wasserstrom von Wasserstoff zu Sauerstoffseite in Form der Bypass-Verbindung 16 geführt, so wird potentiell nur die Wasserstoffkonzentration im Sauerstoff im Gasabscheider erhöht. Die Sicherheit der Anlage wird somit vorteilhaft weiter erhöht.

In allen drei Ausführungsbeispielen der Figuren 1, 3 und 4 wird deutlich, dass das Zuführen des Wasser-Gas-Gemischs in den Gasabscheidevorrichtungen 20, 21 nahe an der Phasengrenze in den Gasabscheidevorrichtungen 21 und 22 erfolgt. Dies wird durch eine Regelung von Druckventilen gewährleistet, welche an die Gasabscheidevorrichtungen 20, 21 angeschlossen sind (nicht in den Figuren gezeigt). Da beide Behälter hydraulisch miteinander verbunden sind, stellt sich in beiden Gasabscheidevorrichtungen 21 und 20 nahezu die gleiche Füllhöhe ein. Voraussetzung dafür ist, dass die durch den Gasstrom verursachten Druckverluste in den Rohrleitungen, welche an die Gasabscheidevorrichtungen 20, 21 anschließen, keine nennenswerten Druckverluste in der Gasabscheidevorrichtung 20, 21 erzeugt. In anderen Worten sind die Rohrdurchmesser der Rohrleitungen so groß, dass keine Limitierung des Stoffstroms auftritt und somit keine Pegelverschiebung in den Gasabscheidevorrichtungen 20, 21 auftritt.

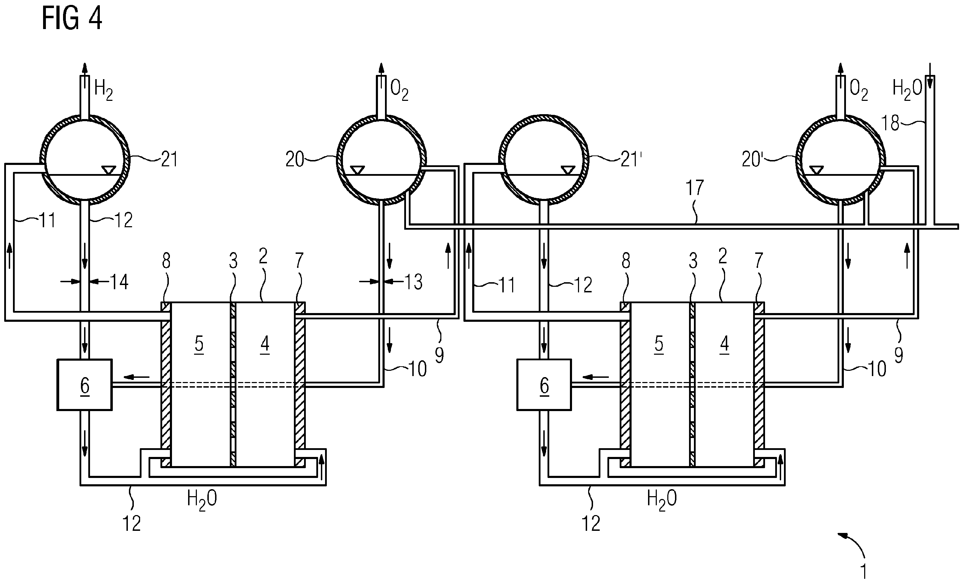

Figur 4 zeigt eine Elektrolyseeinheit 1 mit zwei Elektrolysezellen 2. Beide Elektrolysezellen verfügen jeweils über eine sauerstoffseitige erste Gasabscheidevorrichtung 20, 20' und über eine wasserstoffseitige zweite Gasabscheidevorrichtung 21, 21`. Die Rückführung des Wassers ist analog zum ersten Ausführungsbeispiel derart gestaltet, dass die zurückfließenden Wasserströme sich im Wärmetauscher vermischen und anschließend zurück zur Sauerstoffseite in die Elektrolysezelle geführt werden. Es ist alternativ ebenso denkbar, einen Bypass gemäß dem dritten Ausführungsbeispiel auszuführen. Die sauerstoffseitigen Gasabscheidevorrichtungen 20, 20 sind über eine siphonartige fünfte Leitung 17 miteinander verbunden. Weiterhin umfasst die fünfte Leitung 17 eine Zuführvorrichtung 18 für Frischwasser. In diesem Ausführungsbeispiel handelt es sich um einen einseitigen Umwälzbetrieb auf der Sauerstoffseite. Das Verbinden mehrerer Elektrolysezellen über die siphonartige fünfte Leitung 17 gewährleistet vorteilhaft das Nachführen von Wasser, was das Absinken des Flüssigkeitsspiegels in den Gasabscheidevorrichtungen 20, 21 vorteilhaft vermeidet. Das Zuführen des Frischwassers des während der Reaktion verbrauchten Wassers erfolgt vorteilhaft in die fünfte Leitung 17, welche die ersten Gasabscheidevorrichtungen 20 miteinander verbindet. Dies vermeidet vorteilhaft eine zusätzliche Rohrleitung zu den Gasabscheidevorrichtungen.

Um einen Gasdurchtritt möglichst unwahrscheinlich zu gestalten, und somit einen Störfall zu vermeiden, werden die ersten Gasabscheidevorrichtungen 20, 20` der Sauerstoffseite miteinander verbunden und, davon getrennt, die zweiten Gasabscheidevorrichtungen 21, 21' der Wasserstoffseite miteinander verbunden. In anderen Worten werden die Gasabscheidevorrichtungen nur derart miteinander verbunden, dass die Sauerstoffseite von der Wasserstoffseite getrennt bleibt. Zusätzlich zu dem in Figur 5 gezeigten Ausführungsbeispiel ist es also möglich, auch die zweiten Gasabscheidevorrichtungen 21 auf der Wasserstoffseite über eine siphonartige Leitung miteinander zu verbinden. Vorteilhaft werden somit die Füllhöhen zwischen den zweiten Gasabscheidevorrichtungen 21 ausgeglichen

## Patentansprüche

1. Elektrolyseeinrichtung (1) zur Elektrolyse von Wasser mit:
- wenigstens einer Elektrolysezelle (2), wobei die Elektrolysezelle (2) einen Anodenraum (4) mit einer Anode (7) und einen Kathodenraum (5) mit einer Kathode (8) umfasst, wobei der Anodenraum (4) vom Kathodenraum (5) mittels einer Protonenaustausch-Membran (3) getrennt ist, und der Anodenraum (4) geeignet ist, Wasser aufzunehmen und an der Anode (7) zu einem ersten Produkt umfassend Sauerstoff zu oxidieren und der Kathodenraum (5) geeignet ist, Wasser aufzunehmen und an der Kathode (8) zu einem zweiten Produkt umfassend Wasserstoff zu reduzieren;
- einer ersten Gasabscheidevorrichtung (20) zum Abscheiden von Sauerstoff;
wobei die erste Gasabscheidevorrichtung (20) zum Durchführen eines natürlichen Wasserumlaufs oberhalb der Elektrolysezelle (2) angeordnet ist,
- einer ersten Leitung (9), welche mit einem oberen Abschnitt des Anodenraums (4) und der ersten Gasabscheidevorrichtung (20) verbunden ist und
- einer zweiten Leitung (10), welche mit der ersten Gasabscheidevorrichtung (20) und einem unteren Abschnitt des Anodenraums (4) verbunden ist,
- einer zweiten Gasabscheidevorrichtung (21) zum Abscheiden von Wasserstoff;
- einer dritten Leitung (11), welche mit einem oberen Abschnitt des Kathodenraum (5) und der zweiten Gasabscheidevorrichtung (21) verbunden ist;
- einer vierten Leitung (12), welche mit der zweiten Gasabscheidevorrichtung (21) und einem unteren Abschnitt des Anodenraums (4) und/oder Kathodenraums (5) verbunden ist, wobei die zweite Gasabscheidevorrichtung (21) zum Durchführen eines natürlichen Wasserumlaufs oberhalb der Elektrolysezelle (2) angeordnet ist, wobei in der zweiten Leitung (10) ein erster Wärmetauscher (6) und in der vierten Leitung (12) ein zweiter Wärmetauscher angeordnet ist und der erste Wärmetauscher (6) und der zweite Wärmetauscher thermisch gekoppelt sind, und
- die zweite Leitung (10) und die vierte Leitung (12) zum Wasserausgleich über eine Verbindungsleitung (16) verbunden sind, wobei die natürlichen Wasserumläufe aufgrund der Dichteunterschiede des Wassers und der Produkte auf natürliche Weise, ohne den Einsatz von Pumpen, erfolgen.

2. Verfahren zum Betreiben einer Elektrolyseeinrichtung (1) nach Anspruch 1 zur Elektrolyse von Wasser, wobei in der Elektrolysezelle (2) aus Wasser als Edukt das Sauerstoff umfassendes erstes Produkt und das Wasserstoff umfassendes zweites Produkt mittels einer Elektrolyse an der Protonenaustausch-Membran (3) hergestellt wird, wobei ein Umlauf des Edukts, des ersten Produkts und des zweiten Produkts als natürlicher Wasserumlauf, der aufgrund der Dichteunterschiede der des Wassers und der Produkte auf natürliche Weise, ohne den Einsatz von Pumpen, erfolgt.

3. Verfahren nach Anspruch 2, wobei als ein Betriebsdruck atmosphärischer Druck herrscht.

## Claims

1. Electrolysis device (1) for the electrolysis of water, having:
- at least one electrolysis cell (2), wherein the electrolysis cell (2) comprises an anode space (4) having an anode (7) and a cathode space (5) having a cathode (8), wherein the anode space (4) is separated from the cathode space (5) by means of a proton exchange membrane (3), and the anode space (4) is suitable for receiving water and oxidizing it at the anode (7) to give a first product comprising oxygen and the cathode space (5) is suitable for receiving water and reducing it at the cathode (8) to give a second product comprising hydrogen;
- a first gas separating apparatus (20) for the separation of oxygen;
wherein the first gas separating apparatus (20) is arranged above the electrolysis cell (2) for the purposes of performing a natural circulation of water,
- a first line (9) which is connected to an upper section of the anode space (4) and to the first gas separating apparatus (20) and
- a second line (10) which is connected to the first gas separating apparatus (20) and to a lower section of the anode space (4),
- a second gas separating apparatus (21) for the separation of hydrogen;
- a third line (11) which is connected to an upper section of the cathode space (5) and to the second gas separating apparatus (21) ;
- a fourth line (12) which is connected to the second gas separating apparatus (21) and to a lower section of the anode space (4) and/or cathode space (5), wherein the second gas separating apparatus (21) is arranged above the electrolysis cell (2) for the purposes of performing a natural circulation of water, wherein a first heat exchanger (6) is arranged in the second line (10) and a second heat exchanger is arranged in the fourth line (12) and the first heat exchanger (6) and the second heat exchanger are thermally coupled, and
- the second line (10) and the fourth line (12) are connected via a connection line (16) for the purposes of water equalization, wherein the natural circulations of water take place naturally due to the density differences of the water and the products, without the use of pumps.

2. Method for operating an electrolysis device (1) according to Claim 1 for the electrolysis of water, wherein in the electrolysis cell (2) the oxygen-comprising first product and the hydrogen-comprising second product are produced by means of electrolysis at the proton-exchange membrane (3) from water as starting material, wherein circulation of the starting material, the first product and the second product takes place in the form of natural circulation of water which takes place naturally due to the density differences of the water and the products, without the use of pumps.

3. Method according to Claim 2, wherein the prevailing operating pressure is atmospheric pressure.

## Revendications

1. Dispositif (1) d'électrolyse pour l'électrolyse de l'eau, comprenant :
- au moins une cellule (2) d'électrolyse, dans lequel la cellule (2) d'électrolyse comprend un compartiment (4) anodique ayant une anode (7) et un compartiment (5) cathodique ayant une cathode (8), dans lequel le compartiment (4) anodique est séparé du compartiment (5) cathodique au moyen d'une membrane (3) d'échange de protons et le compartiment (4) anodique est propre à recevoir de l'eau et à l'oxyder à l'anode (7) en un premier produit comprenant de l'oxygène et le compartiment (5) cathodique est propre à recevoir de l'eau et à la réduire à la cathode (8) en un deuxième produit comprenant de l'hydrogène ;
- un premier dispositif (20) de séparation de gaz pour séparer de l'oxygène ;
dans lequel le premier dispositif (20) de séparation de gaz est, pour effectuer une circulation naturelle de l'eau, disposé au-dessus de la cellule (2) d'électrolyse,
- un premier conduit (9), qui communique avec une partie supérieure du compartiment (4) anodique et avec le premier dispositif (20) de séparation de gaz et
- un deuxième conduit (10), qui communique avec le premier dispositif (20) de séparation de gaz et avec une partie inférieure du compartiment (4) anodique,
- un deuxième dispositif (21) de séparation de gaz pour séparer de l'hydrogène ;
- un troisième conduit (11), qui communique avec une partie supérieure du compartiment (5) cathodique et avec le deuxième dispositif (21) de séparation de gaz ;
- un quatrième conduit (12), qui communique avec le deuxième dispositif (21) de séparation de gaz et avec une partie inférieure du compartiment (4) anodique et/ou du compartiment (5) cathodique, dans lequel le deuxième dispositif (21) de séparation de gaz est, pour effectuer une circulation naturelle de l'eau, disposé au-dessus de la cellule (2) d'électrolyse, dans lequel il est monté dans le deuxième conduit (10), un premier échangeur de chaleur (6) et dans le quatrième conduit (12), un deuxième échangeur de chaleur et le premier échangeur (6) de chaleur et le deuxième échangeur de chaleur sont couplés thermiquement, et
- le deuxième conduit (10) et le quatrième conduit (12) communiquent par un conduit (16) de liaison pour la compensation de l'eau, dans lequel les circulations naturelles de l'eau s'effectuent en raison des différences de masse volumique de l'eau et des produits d'une façon naturelle, sans l'utilisation de pompe.

2. Procédé pour faire fonctionner un dispositif (1) d'électrolyse suivant la revendication 1 pour l'électrolyse de l'eau, dans lequel on produit, au moyen d'une électrolyse sur la membrane (3) d'échange de protons dans la cellule (2) d'électrolyse à partir de l'eau comme éduit, le premier produit comprenant de l'oxygène et le deuxième produit comprenant de l'hydrogène, dans lequel une circulation de l'éduit, du premier produit et du deuxième produit, comme circulation d'eau naturelle, a lieu en raison des différences de masse volumique de l'eau et des produits de manière naturelle, sans utilisation de pompe.

3. Procédé suivant la revendication 2, dans lequel la pression de fonctionnement est la pression atmosphérique.
